# EUROPEAN PATENT APPLICATION

(11) **EP 2 495 589 A1**
(43) Date of publication of application: **05.09.2012**
(21) Application number: 11305231.0
(22) Date of filing: 04.03.2011
(51) Int. Cl.: G02B 6/036, H01S 3/067

(54) **Rare earth doped amplifying optical fiber for compact devices and method of manufacturing thereof**

(71) Applicant: Draka Comteq B.V., 1083 HJ Amsterdam (NL)
(72) Inventor: Burov, Ekaterina, 92100 Boulogne-Billancourt (FR); Pastouret, Alain, 91300 Massy (FR); De Montmorillon, Louis-Anne, 78000 Versailles (FR); Bergonzo, Aurélien, 92310 Sevres (FR)
(74) Representative: op den Brouw-Sprakel, Vera Stefanie Irene

(57) **Abstract**

This rare earth doped amplifying optical fiber comprises, from the center to the periphery: an inner core, an inner cladding, a depressed trench and an outer cladding. The inner core has a radius r₁ between 2.5 µm and 3.1 µm, a refractive index difference Δn₁ between 8.0×10⁻³ and 10.5×10⁻³ with respect to the outer cladding and has a silica-based main matrix doped with at least one rare earth element. The inner cladding has a radius r₂ between 4.1 µm and 15.8 µm. The depressed trench has a radius r₃ and a negative refractive index difference Δn₃ between -14.2x 10⁻³ and -3.7×10⁻³ with respect to the outer cladding. r₂-r₁ is comprised between 1.4 µm and 12.9 µm, r₃-r₂ is comprised between 4.7 µm and 18.9 µm; and the volume integral of the depressed trench, V₁₃, defined as ${V}_{13} = 2. {\int }_{{r}_{2}}^{{r}_{3}} Δn \left(r\right) . rdr \approx \left({{r}_{3}}^{2}-{{r}_{2}}^{2}\right) \times Δ ⁢ {n}_{3}$, is comprised between -2200x 10⁻³ µm² and -1600x 10⁻³ µm². Use in compact devices.

## Description

The present invention pertains to the field of amplifying optical fibers adapted to amplify the transmitted signal. It relates more particularly to a rare earth doped monomode optical fiber designed for compact devices and to a method for manufacturing said fiber.

An optical fiber conventionally consists of an optical core or inner core, for transmitting and possibly amplifying an optical signal, and of an optical cladding or outer cladding, for confining the optical signal within the inner core. To that end, the refractive index of the inner core n_{c} is greater than the refractive index of the outer cladding n_{g}.

For optical fibers, the refractive index profile is generally qualified in relation to the tracing of the graph which plots the function associating the refractive index with the fiber radius. Conventionally, the distance r to the center of the fiber is shown along the abscissa, and the difference between the refractive index at a given distance of the center of the fiber and the refractive index of the fiber outer cladding is shown along the ordinate axis. The refractive index profile is therefore referred to as a "step", a "trapezoidal", a "triangular" or an "alpha" profile for graphs having the respective shapes of a step, a trapezoid, a triangle or a gradient. These curves are representative of the theoretical or set profile of the fiber, the manufacturing stresses of the fiber possibly leading to a slightly different profile.

There are mainly two types of optical fibers: multimode fibers and monomode fibers. In a multimode fiber, for a given wavelength, several optical modes propagate simultaneously along the fiber. In a monomode fiber, the fundamental mode is privileged and the higher order modes are significantly attenuated.

Amplifying fibers, particularly optical fibers doped with rare earth elements, are commonly used for numerous optical applications.

For example, erbium doping is used in long-distance optical telecommunication systems for amplifying transmitted optical signals. Such optical fibers are used in erbium-doped fiber amplifiers (*i.e*., EDFAs) and have a central core composed of a silica matrix that includes doping elements, such as erbium at concentrations of about 250 ppm to 1000 ppm (0.025 to 0.1 weight percent), optionally combined with complementary doping elements that make it possible to improve amplification (*e.g*., alumina for broadening the gain bandwidth for wavelength dense multiplexing (WDM) applications).

Optical amplification in a rare earth doped optical fiber is achieved by injecting into the optical fiber a pump signal, which excites the rare earth ions (*e.g*., Er³⁺ in EDFA). When a light signal passes through this portion of optical fiber, it deenergizes the ions by stimulated emission by producing a photon identical in all respects to the incident photon. The light signal is thus doubled. A portion of such an optical fiber in combination with a resonant cavity constituted by a system of mirrors, or Bragg gratings, forms an optical fiber laser. The wavelength and power of the laser depend on the rare earth element used and its concentration.

Generally, the amplifying performance of the rare earth doped fiber is defined by the following parameters:
- Pump power: the pump power of an amplifying fiber is defined as the power of the pump, usually expressed in W or mW, launched in the optical fiber core to allow the optical amplification processus;
- Numerical Aperture (NA): the NA is defined as:$N ⁢ A = \sqrt{{n}_{c}^{2} - {n}_{g}^{2}}$
   where n_{c} is the refractive index of the inner core and n_{g} is the refractive index of the outer cladding;
- Power Conversion Efficiency (PCE): the PCE of a fiber is a measure of how much of the energy of the input power source (i.e. the pump) is usefully transferred to the amplifier output: $PCE = \frac{{P}_{signal - out} - {P}_{signal - in}}{{P}_{pump}}$
   where P_{signal-out} is the power of the output signal, P_{signal-in} is the power of the input signal and Pᵤₘₚ is the pump power;
- Quantum Conversion Efficiency (QCE): the QCE of a fiber is defined as a measure of how much of the energy at the power source (the pump) wavelength is usefully transferred to the amplifying wavelength. QCE is a direct measure of the efficiency of an amplifier: it is linked to the PCE according to the following relation:
$QCE = PCE \times \frac{{λ}_{signal}}{{λ}_{pump}}$

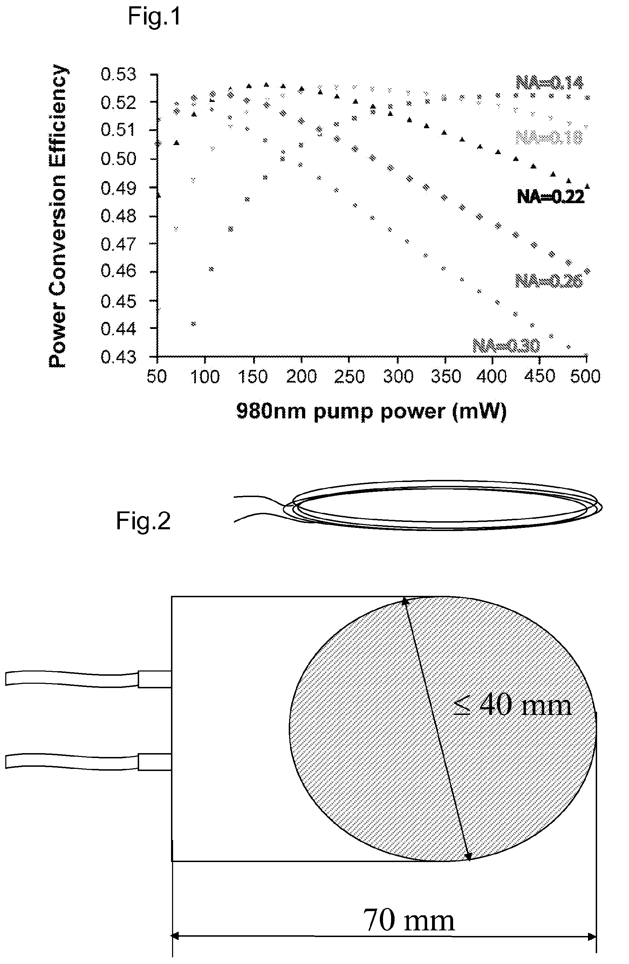

**Figure 1** shows the value of the PCE as a function of the value of the pump power expressed in mW at a wavelength of 980 nm, for known fibers having various values of the NA, namely, NA = 0.14, NA = 0.18, NA = 0.22, NA = 0.26 and NA = 0.30. It can be seen that, in particular for values of the pump power higher than or equal to 350 mW, the highest values of the PCE are obtained for the lowest values of the NA.

In order to reduce more and more the size of fiber amplifiers, the packaging size of optical components has to be reduced, inducing a reduction in the volume allocated to the gain medium i.e. the rare earth doped fiber.

An efficient way to reduce volume is to reduce the storage radius of the amplifying fiber, i.e. the radius of curvature of the fiber when it is bent for packaging or installing.

As shown in **Figure 2****,** the typical fiber storage radius used in commercial compact amplifiers is equal to or lower than 20 mm.

However, according to the rare earth doped fiber design, in particular its monomode propagation conditions (mode field diameter, cut-off wavelength, numerical aperture), specified to address the fiber application field, this reduction in the radius of curvature can induce an increase in the macrobending losses of the fiber (hereafter referred to as bending losses).

Table 1 shows the theoretical impact of the numerical aperture on fiber bending losses for different storage (curvature) radii. The fiber core radii are calculated to have monomode propagation at a wavelength of 1550 nm.

**Table 1**

| | | | | | | | | | |
|---|---|---|---|---|---|---|---|---|---|
| NA | | 0.10 | 0.12 | 0.13 | 0.14 | 0.15 | 0.16 | 0.17 | 0.18 |
| Δn₁ x 10³ | | 3.5 | 5.1 | 5.8 | 6.7 | 7.7 | 8.8 | 9.9 | 11.1 |
| r₁ (µm) | | 4.38 | 3.68 | 3.41 | 3.16 | 2.95 | 2.77 | 2.61 | 2.46 |
| Bending losses (dB/m) | R=10mm | 2550 | 343 | 106 | 27.0 | 4.72 | 0.5 | 0.06 | 0.005 |
| | R=20mm | 100 | 1.65 | 0.15 | 0.009 | 0.0003 | 0.0 | 0.0 | 0.0 |
| | R=30mm | 4.56 | 0.009 | 0.0002 | 0.0 | 0.0 | 0.0 | 0.0 | 0.0 |

In Table 1, Δn₁ is the refractive index difference of the inner core with respect to the outer cladding, r₁ is the radius of the inner core and R is the storage radius of the fiber.

The bending losses are calculated at a wavelength of 1550 nm and the fiber cut-off wavelength is 1134 nm.

It can be seen that, for NA lower than 0.18, the bending losses of the rare earth doped fiber become non-negligible for a compact configuration (R < 20 mm).

In the prior art, there is a limit in achievable bending loss reduction in the case of high pump power utilization as, in this case, the value of the NA in a compact amplifier configuration has to be reduced.

Indeed, for amplifiers operating at relatively low pump power, namely, around 250 mW, the induced bending losses can be neglected even at low fiber storage radius, as in this case the related fibers generally exhibit a high numerical aperture NA, typically NA > 0.22.

However, the induced bending losses are not negligible for amplifiers operating at higher pump power, for example around 500 mW or above.

Nowadays, as the demand for amplifiers operating at such higher pump power increases, fibers with lower NA, typically NA < 0.18, are needed in order to ensure an optimal power conversion efficiency, as depicted in Figure 1.

The best existing solution to decrease the NA consists in decreasing the refractive index of the inner core. Consequently, the bending losses will increase, as shown in the prior art examples given in Table 1. The efficiency of the complete assembly or sub-assembly will thus be reduced.

Therefore, the reduction of the induced bending losses is crucial for amplifying fibers operating at high pump power in a compact configuration.

Two main techniques have been used in the prior art for reducing the overall bending losses i.e. along the whole length of the optical fiber.

A first technique consists in reducing the fiber length, by increasing the doping, e.g. the rare earth content, of the inner core of the fiber.

However, this may lead to a decrease in amplifying efficiency, due to a so-called concentration quenching phenomenon. Namely, when the local concentration of rare earth ions becomes high enough, the average distance between two rare earth ions may decrease and may even give rise to the formation of rare earth ion pairs. In such a case, it is no longer valid to assume that each ion is an isolated ion that acts independently of its neighbors and the energy transfer between ions becomes possible. This undesirable effect reduces the energy available for amplification and consequently reduces the amplifier efficiency.

Moreover, the bending loss reduction resulting from fiber length reduction remains rather limited. Furthermore, this technique does not allow to reach low NA rare earth doped fibers needed for high pump power conditions.

A second technique consists in using core rods in spite of fibers, so as to avoid any bending.

However, using core rods will not make it possible to achieve an integrated system using only optical fibers. Thus, this technique is not considered as a viable industrial solution.

Document WO-A-2010/080952 discloses bend insensitive optical fibers with a low refractive index glass ring in the cladding, namely, a ring where the relative refractive index percent relative to pure silica glass is less than -0.5%. However, the design of the proposed fibers do not allow to reach the bending loss reduction targeted by the present invention, as document WO-A-2010/080952 does not target high power applications.

Thus, there is a need for a rare earth doped amplifying optical fiber adapted to be used in a compact configuration for high power applications. The problem to be solved is to limit the bending losses induced by bending due to small fiber storage radius for amplifiers operating at high pump power i.e. around 500 mW or more.

The invention aims at remedying the above-mentioned drawbacks of the prior art.

More particularly, the present invention proposes adapting the fiber refractive index profile to strongly reduce the induced bending losses at low storage radius, while keeping high amplifying efficiency.

For that purpose, the invention provides a rare earth doped amplifying optical fiber comprising, from the center to the periphery:
- an inner core,
- an inner cladding surrounding the inner core,
- a depressed trench surrounding the inner cladding and
- an outer cladding,
- the inner core having a radius r₁, a refractive index difference Δn₁ with respect to the outer cladding and having a silica-based main matrix doped with at least one rare earth element,
- the inner cladding having a radius r₂ and a refractive index difference Δn₂ with respect to the outer cladding,
- the depressed trench having a radius r₃ and a negative refractive index difference Δn₃ with respect to the outer cladding,
   wherein
- r₁ is comprised between 2.5 µm and 3.1 µm, r₂ is comprised between 4.1 µm and 15.8 µm, r₂-r₁ is comprised between 1.4 µm and 12.9 µm, r₃-r₂ is comprised between 4.7 µm and 18.9 µm, Δn₁ is comprised between 8.0×10⁻³ and 10.5×10⁻³ and Δn₃ is comprised between -14.2×10⁻³ and -3.7×10⁻³; and
- the volume integral of the depressed trench, V₁₃, defined as
   ${V}_{13} = 2. {\int }_{{r}_{2}}^{{r}_{3}} Δn \left(r\right) . rdr \approx \left({{r}_{3}}^{2}-{{r}_{2}}^{2}\right) \times Δ ⁢ {n}_{3}$ , is comprised between -2200×10⁻³ µm² and -1600×10⁻³ µm².

According to particular embodiments, the optical fiber of the invention may further have one or more of the following:
- a numerical aperture comprised between 0.16 and 0.18, preferably between 0.16 and 0.17; at a wavelength of 1550 nm, a Mode Field Diameter, MFD, less than or equal to 8.0 µm; and bending losses less than 0.01 dB/m for a radius of curvature greater than or equal to 5 mm;
- an inner core doped by an element reducing the refractive index of silica, preferably fluorine;
- an inner core doped by the addition of nanoparticles containing at least one rare earth element and/or by the addition of at least one rare earth element from chloride salt precursors;
- the at least one rare earth element may be erbium, ytterbium or thulium, or a combination thereof;
- a rare earth concentration in the inner core comprised between 0.01 wt% and 0.5 wt%, preferably between 0.01 wt% and 0.2 wt%;
- an inner core further doped with germanium and/or phosphorus and/or aluminum;
- a refractive index difference Δn₂ of the inner cladding with respect to the outer cladding comprised between -1.0×10⁻³ and 1×10⁻³, preferably between -0.5×10⁻³ and 0.5×10⁻³ and more preferably substantially zero;
- a cut-off wavelength below 1500 nm.

For the same purpose as mentioned above, the invention also relates to an optical fiber laser comprising at least a portion of an optical fiber as succinctly described above.

For the same purpose as mentioned above, the invention also relates to an optical amplifier comprising at least a portion of an optical fiber as succinctly described above and having a pump power greater than 500 mW.

For the same purpose as mentioned above, the invention also provides a method of manufacturing a rare earth doped amplifying optical fiber as succinctly described above, comprising steps of:
- making a preform tube, so as to obtain an inner cladding, a depressed trench and an outer cladding having a desired refractive index profile;
- doping the preform tube obtained in the preform tube making step, by forming a doped inner core in the preform tube;
- collapsing the preform tube into a preform rod;
- optionally overcladding or sleeving the preform rod into a preform; and
- drawing the preform into an optical fiber.

For the same purpose as mentioned above, the invention also provides a method of manufacturing a rare earth doped amplifying optical fiber as succinctly described above, comprising steps of:
- making a first doped preform rod consisting at least of a doped inner core having a desired refractive index profile, by
   - making a first preform tube starting from an external tube,
   - doping the first preform tube forming a doped inner core in the first preform tube,
   - collapsing the first preform tube into the first doped preform rod and
   - eliminating the external tube;
- separately making a second preform tube, so as to obtain an inner cladding, a depressed trench and an outer cladding having a desired refractive index profile;
- assembling the second preform tube around the first doped preform rod and fusing the second preform tube onto the first doped preform rod, so as to obtain a second doped preform rod;
- optionally overcladding or sleeving the second doped preform rod into a preform; and
- drawing the preform into an optical fiber.

According to a particular feature, the assembling step comprises fusing the second preform tube onto the first doped preform rod at a temperature above 2000°C.

According to a particular feature, the step of doping the preform tube or the step of making a first doped preform rod comprises using a Modified Chemical Vapor Deposition, MCVD process.

According to a particular feature, the MCVD process comprises steps of:
- depositing at least one first core glass layer on the inner surface of the preform tube;
- depositing a glass layer on the inner surface of the at least one first core glass layer, at a sub-sintering temperature, so as to obtain a porous core layer;
- adding nanoparticles to the porous core layer, so as to obtain a doped porous core layer; and
- calcinating the doped porous core layer to strengthen nanoparticle structure, preferably up to 1200°C during at least one hour.

According to a particular feature, the step of making a preform tube or the step of making a second preform tube comprises using a Plasma Chemical Vapor Deposition, PCVD, process.

Other characteristics and advantages of the invention will become apparent on reading the following description of particular embodiments of the invention given by way of non-limiting examples and with reference to the accompanying drawings, wherein:
- Figure 1, already described, is a graph showing the evolution of the power conversion efficiency according to the pump power at a wavelength of 980 nm for known optical fibers with different values of the numerical aperture;
- Figure 2, already described, shows the common design of a compact EDFA;
- Figure 3 shows a refractive index profile of an optical fiber in accordance with the present invention, in a particular embodiment;
- Figure 4 illustrates a first embodiment of a method of manufacturing an optical fiber according to the invention; and
- Figure 5 illustrates a second embodiment of a method of manufacturing an optical fiber according to the invention.

In order to achieve a rare earth doped optical fiber in accordance with the present invention, the sensitivity of the fiber to the bending losses has to be reduced and, in a particular embodiment, a fiber having a low numerical aperture NA, namely, between 0.16 and 0.18 is to be obtained.

According to a particular embodiment of the invention, the rare earth elements are incorporated into the fiber core from commercial precursors such as chloride salts and the low NA is realized by the incorporation, within the matrix of the inner core of the fiber, of an element reducing the refractive index of the inner core.

According to another particular embodiment of the invention, the rare earth elements are incorporated from nanoparticle (NP) doping, allowing to manage the amplification performance of the fiber independently from the composition of the inner core. The matrix of the inner core is doped by incorporating NPs comprising rare earth elements. The low NA is realized by adjusting the composition of the main core matrix, by using a dopant that increases the refractive index such as germanium or phosphorus and/or a dopant that decreases the refractive index such as fluorine.

According to the invention, the reduction of the sensitivity to the bending losses is achieved by realizing a depressed trench in the cladding of the fiber, at a suitable distance of the inner core. Moreover, the trench has an appropriate width and depth. Indeed, these trench parameters, which are detailed below, are chosen to ensure low bending losses with a negligible impact on the NA.

The optical fiber according to the invention is a rare earth doped amplifying monomode fiber. It comprises, from the center to the periphery: an inner core, an inner cladding surrounding the inner core, a depressed trench surrounding the inner cladding and an outer cladding.

The inner core has a silica-based main matrix doped with at least one rare earth element. The inner core has a radius r₁ and a refractive index difference Δn₁ with respect to the outer cladding. The radius r₁ is actually the radial distance from the center of the fiber to the outer periphery of the inner core.

The inner cladding has a radius r₂ and a refractive index difference Δn₂ with respect to the outer cladding. The radius r₂ is actually the radial distance from the center of the fiber to the outer periphery of the inner cladding.

The depressed trench has a radius r₃ and a negative refractive index difference Δn₃ with respect to the outer cladding. The radius r₃ is actually the radial distance from the center of the fiber to the outer periphery of the depressed trench.

The volume integral of the depressed trench V₁₃ is defined as: ${V}_{13} = 2. {\int }_{{r}_{2}}^{{r}_{3}} Δ ⁢ n \left(r\right) . r ⁢ d ⁢ r \approx \left({{r}_{3}}^{2}-{{r}_{2}}^{2}\right) \times Δ ⁢ {n}_{3} .$

Table 2 below gives 17 examples of fibers in accordance with the present invention.

The notations used in Table 2 are as follows:
- r₁ is the radius of the inner core;
- r₂ is the radius of the inner cladding;
- r₃ is the radius of the depressed trench;
- Δn₁ is the refractive index difference between the inner core and the outer cladding;
- Δn₂ is the refractive index difference between the inner cladding and the outer cladding;
- Δn₃ is the refractive index difference between the depressed trench and the outer cladding;
- V₁₃ is the volume integral of the depressed trench;
- NA is the numerical aperture;
- MFD is the mode field diameter, given at a wavelength of 1550 nm;
- BL refers to the bending losses i.e. the macro bending losses, given at a wavelength of 1550 nm;
- R is the radius of curvature of the bent fiber;
- LP01 is the fundamental mode;
- LP11 is the more robust higher order mode;
- the Lap 11 leakage losses are the losses when the fiber is submitted to straight conditions. At 1550 nm, the fundamental mode LP01 is propagating so that the leakage losses of the fiber are zero but the more robust higher order mode LP11 undergoes leakage losses. When these leakage losses are higher than 19.34 dB, it is considered that the higher order mode is cut. At 1550 nm, this is the case of all examples in Table 2 after 10m-long transmission. In other words, all fibers detailed in examples 1 to 17 are single mode at 1550 nm after a 10m-long transmission.

**Table 2**

| | **r₁** (µm) | **r₂** (µm) | **r₃** (µm) | **r₂-r₁** (µm) | **r₃-r₂** (µm) | **Δn₁** x1000 | **Δn₂** x1000 | **Δn₃** x1000 | **V₁₃** (µm²) x1000 |
|---|---|---|---|---|---|---|---|---|---|
| Ex1 | 2.80 | 8.00 | 18.00 | 5.2 | 10 | 8.80 | 0.00 | -7.00 | -1820 |
| Ex2 | 2.80 | 10.04 | 19.47 | 7.24 | 9.43 | 8.80 | 0.00 | -7.00 | -1949 |
| Ex3 | 2.80 | 5.89 | 18.52 | 3.09 | 12.63 | 8.80 | 0.00 | -7.00 | -2157 |
| Ex4 | 2.80 | 6.24 | 16.73 | 3.44 | 10.49 | 8.80 | 0.00 | -7.00 | -1687 |
| Ex5 | 2.80 | 4.81 | 16.43 | 2.01 | 11.62 | 8.80 | 0.00 | -7.00 | -1728 |
| Ex6 | 2.80 | 4.57 | 18.06 | 1.77 | 13.49 | 8.80 | 0.00 | -7.00 | -2137 |
| Ex7 | 2.57 | 8.24 | 14.85 | 5.67 | 6.61 | 9.82 | 0.85 | -11.85 | -1807 |
| Ex8 | 2.86 | 15.75 | 20.48 | 12.89 | 4.73 | 9.11 | -0.93 | -11.87 | -2035 |
| Ex9 | 3.08 | 10.85 | 22.27 | 7.77 | 11.42 | 9.42 | -0.95 | -4.54 | -1717 |
| Ex10 | 2.76 | 4.14 | 16.66 | 1.38 | 12.52 | 9.70 | 0.21 | -8.33 | -2169 |
| Ex11 | 2.76 | 15.58 | 24.20 | 12.82 | 8.62 | 9.68 | -0.66 | -5.72 | -1961 |
| Ex12 | 2.76 | 4.67 | 12.01 | 1.91 | 7.34 | 9.77 | -0.73 | -13.39 | -1637 |
| Ex13 | 3.01 | 8.24 | 16.83 | 5.23 | 8.59 | 8.56 | -0.57 | -8.90 | -1915 |
| Ex14 | 2.63 | 7.18 | 14.00 | 4.55 | 6.82 | 8.98 | 0.28 | -14.17 | -2048 |
| Ex15 | 2.77 | 4.35 | 13.51 | 1.58 | 9.16 | 8.81 | 0.93 | -13.34 | -2182 |
| Ex16 | 2.90 | 5.30 | 24.18 | 2.4 | 18.88 | 8.79 | -0.45 | -3.74 | -2081 |
| Ex17 | 2.74 | 6.66 | 19.15 | 3.92 | 12.49 | 9.89 | 0.35 | -6.03 | -1945 |

| **given at the 1550nm wavelength** | | | | | | | |
|---|---|---|---|---|---|---|---|
| | **NA** | **MFD (µm)** | **LP01 R=15mm BL** (dB/m) | **LP01 R=10mm BL** (dB/m) | **LP01 R=7.5mm BL** (dB/m) | **LP01 R=5mm BL** (dB/m) | **LP11 leakage losses** (dB/m) |
| Ex1 | 0.16 | 7.62 | 1×10⁻⁷ | 6×10⁻⁵ | 8×10⁻⁴ | 7×10⁻³ | 3.4 |
| Ex2 | 0.16 | 7.73 | 1×10⁻⁷ | 6×10⁻⁵ | 7×10⁻⁴ | 7×10⁻³ | 2.0 |
| Ex3 | 0.16 | 7.27 | 6×10⁻⁸ | 2×10⁻⁵ | 2×10⁻⁴ | 1×10⁻³ | 2.2 |
| Ex4 | 0.16 | 7.35 | 2×10⁻⁷ | 7×10⁻⁵ | 1×10⁻³ | 9×10⁻³ | 8.5 |
| Ex5 | 0.16 | 6.93 | 6×10⁻⁷ | 1×10⁻⁴ | 1×10⁻³ | 7×10⁻³ | 21 |
| Ex6 | 0.16 | 6.84 | 3×10⁻⁷ | 3×10⁻⁵ | 3×10⁻⁴ | 2×10⁻³ | 9.0 |
| Ex7 | 0.17 | 7.53 | 3×10⁻⁹ | 8×10⁻⁶ | 4×10⁻⁴ | 9×10⁻³ | 3.7 |
| Ex8 | 0.16 | 7.30 | 9×10⁻⁸ | 4×10⁻⁵ | 5×10⁻⁴ | 6×10⁻³ | 8.8 |
| Ex9 | 0.17 | 7.28 | 5×10⁻¹⁰ | 7×10⁻⁷ | 4×10⁻⁵ | 1×10⁻³ | 4.9 |
| Ex10 | 0.17 | 6.43 | 7×10⁻⁹ | 4×10⁻⁶ | 7×10⁻⁵ | 7×10⁻⁴ | 6.6 |
| Ex11 | 0.17 | 7.18 | 1×10⁻⁸ | 9×10⁻⁶ | 2×10⁻⁴ | 3×10⁻³ | 4.7 |
| Ex12 | 0.17 | 6.37 | 4×10⁻⁸ | 3×10⁻⁵ | 6×10⁻⁴ | 9×10⁻³ | 14 |
| Ex13 | 0.16 | 7.55 | 4×10⁻⁸ | 2×10⁻⁵ | 4×10⁻⁴ | 5×10⁻³ | 2.4 |
| Ex14 | 0.16 | 7.44 | 3×10⁻⁷ | 9×10⁻⁵ | 1×10⁻³ | 9×10⁻³ | 2.4 |
| Ex15 | 0.16 | 6.49 | 6×10⁻⁷ | 6×10⁻⁵ | 5×10⁻⁴ | 3×10⁻³ | 2.4 |
| Ex16 | 0.16 | 7.24 | 4×10⁻⁸ | 1×10⁻⁵ | 1×10⁻⁴ | 10×10⁻³ | 43 |
| Ex17 | 0.17 | 7.22 | 3×10⁻¹⁰ | 5×10⁻⁷ | 3×10⁻⁵ | 8×10⁻⁴ | 2.0 |

All examples in Table 2 ensure that:
- the fiber has a NA comprised between 0.16 and 0.17, which is a particularly preferred embodiment of the present invention;
- at a wavelength of 1550 nm, the Mode Field Diameter, MFD, of the fiber is less than or equal to 8.0 µm, and is preferably comprised between 6.4 µm and 7.8 µm, more specifically between 6.37 µm and 7.73 µm; and
- the fiber has bending losses less than 0.01 dB/m for a radius of curvature greater than or equal to 5 mm.

Table 2 shows that, for a fiber according to the invention, r₁ is comprised between 2.5 µm and 3.1 µm, r₂ is comprised between 4.1 µm and 15.8 µm, r₂-r₁ is comprised between 1.4 µm and 12.9 µm, r₃-r₂ is comprised between 4.7 µm and 18.9 µm, Δn₁ is comprised between 8.0×10⁻³ and 10.5×10⁻³ and is preferably comprised between 8.56×10⁻³ and 9.89×10⁻³ and Δn₃ is comprised between -14.2×10⁻³ and -3.7×10⁻³.

In addition, the volume integral V₁₃ of the depressed trench of a fiber according to the invention is comprised between -2200x 10⁻³ µm² and -1600x 10⁻³ µm².

Moreover, Δn₂ is comprised between -1.0×10⁻³ and 1.0×10⁻³, preferably comprised between -0.5×10⁻³ and 0.5×10⁻³ and is more preferably substantially zero.

Furthermore, the cut-off wavelength of a fiber according to the invention is below 1500 nm.

In addition, the rare earth concentration in the fiber inner core is comprised between 0.01 wt% and 0.5 wt% and is preferably comprised between 0.01 wt% and 0.2 wt%.

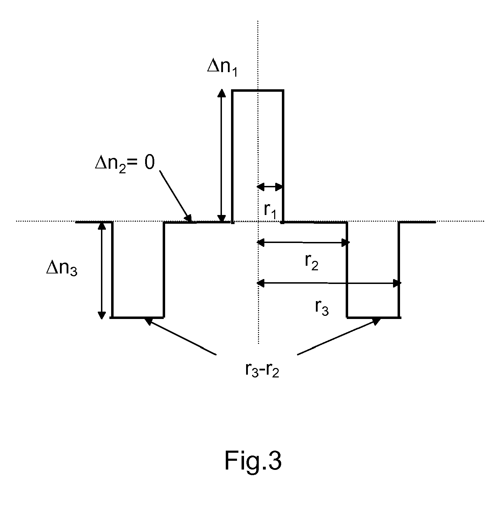

The present invention will be better understood with reference to **Figure 3****,** which shows a refractive index profile of an optical fiber according to the present invention, in a particular embodiment.

In the fiber according to the invention, the inner core is rare earth doped. By way of non-limiting example, erbium may be chosen as a rare earth doping element. As a variant, ytterbium, or thulium, or a combination of erbium and/or ytterbium and/or thulium may be chosen.

According to a particular embodiment, the main core matrix doping is adapted to reduce the refractive index of the inner core. The rare earth elements are incorporated from commercial precursors such as chlorides and the low NA is realized by the incorporation, within the matrix of the inner core of the fiber, of an element reducing the refractive index of the inner core.

By way of non-limiting example of the particular embodiment cited directly above, the doping element reducing the refractive index of the inner core is fluorine. In order to obtain a refractive index profile in accordance with this particular embodiment of the invention, the fluorine concentration may be chosen between 0 and 5 wt%, more preferably between 1 and 4 wt%, where the weight percentage of fluorine, denoted weight%F, is defined as follows: $weight % F = \frac{{w}_{F}}{{w}_{doped glass}} \times 100$
where w_{F} is the total weight of fluorine in the inner core and w_{doped glass} is the total weight of the doped glass i.e. doped silica of which the inner core is constituted.

According to another particular embodiment, the rare earth elements are incorporated from nanoparticle (NP) doping, allowing to manage the amplification performance of the fiber independently from the composition of the inner core. The low NA is realized by adjusting the composition of the main core matrix.

By way of non-limiting example of the particular embodiment cited directly above, a dopant that increases the refractive index, such as germanium, phosphorus, and/or a dopant that decreases the refractive index, such as fluorine, may be used.

Figure 3 corresponds to a particular embodiment in which the inner core is doped with erbium and illustrates the refractive index profile of all the examples of Table 2 above.

As shown in Figure 3, the inner core has a step-shaped refractive index profile the end of which is located at a distance r₁ from the center of the fiber. The inner core is surrounded by an inner cladding having a refractive index difference with respect to the outer cladding that is zero. The depressed trench surrounds the inner cladding and has a negative refractive index difference with respect to the outer cladding.

The refractive index profile of a fiber according to the invention can be obtained by a manufacturing method that will be described below. Two embodiments are possible.

In brief, the first embodiment consists of successive PCVD (Plasma Chemical Vapor Deposition) and MCVD (Modified Chemical Vapor Deposition) steps, whereas the second embodiment consists of parallel steps of PCVD and MCVD followed by an assembling step.

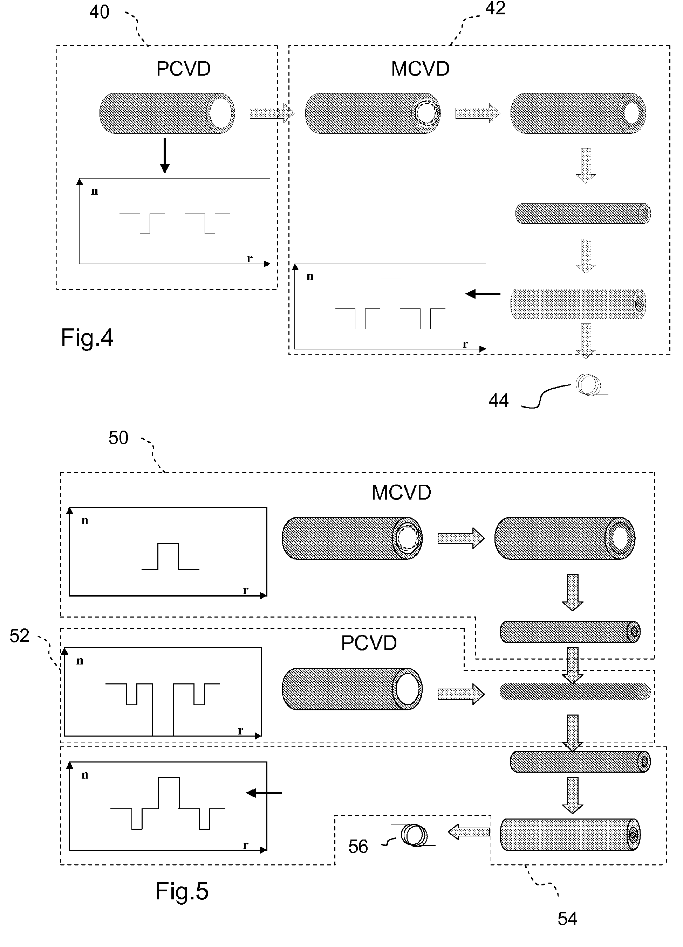

The first embodiment will be detailed with reference to **Figure 4****.**

A first step 40 consists of realizing the refractive index profile of the inner cladding, depressed trench and outer cladding of a preform of the optical fiber to be manufactured, preferably through a Plasma Chemical Vapor Deposition (PCVD) process according to a controlled gas delivery program. It ensures the cladding refractive index profile of the preform.

The controlled gas delivery program makes it possible to incorporate gaseous glass forming precursors such as SiCl₄, GeCl₄ and C₂F₆ according to specified compositions.

Successive glass layers are deposited on the inner surface of a glass tube at a temperature above 1700°C in this step 40. The composition of the glass layers is determined according to the targeted refractive index profile, as follows.

The first layers are made of silica (SiO₂) and will determine the reference level of the refractive index profile. Optionally, the first layers may also be doped with germanium, in the form of GeO₂. This will increase the reference level of the preform refractive index: for instance, 1 wt% of germanium will increase the refractive index by about 1.10⁻³.

The depressed trench deposition is achieved at specified preform radial abscises by incorporation of defined quantities of fluorine. This will decrease the refractive index: for instance, 1 wt% of fluorine will decrease the refractive index by about 3.5×10⁻³. In order to achieve a refractive index difference Δn₃ of -7.00×10⁻³ as in the optical fiber of example 1 in Table 2 above, about 2.5 wt% of fluorine has to be incorporated.

In step 40, the last layers of the cladding are made in the same conditions as the first layers.

The use of a PCVD process is advantageous, since it enables incorporating high fluorine content and creating a specific and highly reproducible index profile over a wide fiber radius.

Next, a step 42 consists of making a doped preform, by forming a doped inner core in the preform tube obtained at the end of step 40.

Step 42 is preferably carried out using a Modified Chemical Vapor Deposition (MCVD) process, for doped core deposition according to a controlled gas delivery program which, as in step 40, makes it possible to incorporate gaseous glass forming precursors such as SiCl₄, GeCl₄, C₂F₆ according to specified compositions.

Successive core glass layers are deposited on the inner surface of the preform tube. As in step 40, the composition of the layers is determined according to the targeted refractive index profile, as follows.

The first core layers are deposited at a temperature above 1700°C and are made of silica doped with GeO₂. In order to achieve a refractive index difference Δn₁ of 8.80×10⁻³ as in the optical fiber of example 1 in Table 2 above, about 9 wt% of germanium should be incorporated.

A glass layer having the same composition as the first core layers is then deposited, at a sub-sintering temperature, namely, around 1450°C, in order to obtain a porous core layer.

The porous layer is then impregnated at room temperature with an aqueous suspension containing nanoparticles co-doped with alumina (Al₂O₃) and erbium (Er). The Al/Er atomic ratio within the nanoparticles, that is to say the number of atoms of Al with respect to the number of atoms of Er in the nanoparticles, is adjusted to obtain the desired erbium chemical environment, ensuring the expected gain shape of the fiber. In order to obtain a WDM gain shape in the C-band (1525-1570 nm), nanoparticles having an Al/Er ratio in the order of 200 are incorporated.

The nanoparticles are previously manufactured in a manner known *per se,* in the frame of a stable aqueous suspension using a soft chemical way, at room temperature through co-precipitation of erbium and aluminum salts at a controlled pH. By way of non-limiting example, the Er concentration in the doping solution is 2.10⁻³ mole/l and the Al concentration is 0.4 mole/1.

The impregnation solution is removed from the porous layer after a certain period of time, e.g. around 10 hours and the resulting doped porous layer is dried, under argon flux at room temperature.

According to the present invention, the doped porous layer is then calcined up to 1200°C during at least 1 hour. This sub-step is particularly advantageous since it makes it possible to strengthen the nanoparticle structure before the collapsing step. This calcination step makes it possible to keep the nanoparticle structure in the preform after collapsing.

The doped porous layer is then sintered at a temperature above 1700°C.

Next, the preform is collapsed at 2200°C to obtain the primary doped preform in the form of a preform rod.

The preform rod is then optionally overcladded or sleeved into a preform by adding external silica tubes or silica layers, in order to adjust the core/clad thickness ratio, to ensure single mode propagation of the signal.

At step 44, the optionally sleeved or overcladded doped preform is drawn into an optical fiber exhibiting for example the following characteristics:
- Erbium attenuation at a wavelength of 1530 nm: 7 dB/m (The erbium attenuation corresponds to the absorption of light due to the presence of erbium ions in the optical fiber core. This absorption depends on the light wavelength.);
- Numerical aperture (NA): 0.16;
- Bending losses for a radius of curvature of 10 mm at a wavelength of 1550 nm: 5.6×10⁻⁵ dB/m;
- Gain over C-Band: 25 dBm at a pump power of 1000 mW.

The second embodiment of a method of manufacturing an optical fiber according to the invention will be detailed with reference to **Figure 5****.**

According to the second embodiment, a doped core rod, preferably made by using MCVD (Modified Chemical Vapor Deposition), is assembled within a cladding profile which is made separately, preferably by using PCVD (Plasma Chemical Vapor Deposition).

In order to avoid easy breaking of the assembly, it is preferable not to directly assemble the PCVD cladding layers with the MCVD doped core rod. Therefore, the PCVD cladding layers are preferably assembled with MCVD cladding layers having the same composition. As a result, the MCVD core rod used in the non-limiting example described here will have some cladding layers on its external part.

According to this second embodiment, the same fiber as in the first embodiment can be manufactured through the following steps.

A first step 50 consists of manufacturing a doped core rod with the same core refractive index profile as in the first embodiment but with the above-mentioned cladding part. It is preferably made through a MCVD process.

A cladding part is firstly formed, by successive deposition of glass layers at a temperature above 1700°C on the inner surface of an external glass tube. The composition of the glass layers is determined according to the targeted refractive index profile. Namely, several layers made of silica (SiO₂) are deposited. In addition, optionally, the layers may be doped with germanium, in the form of GeO₂. As explained above in the first embodiment, this will increase the refractive index.

Next, successive core glass layers are deposited on the inner surface of the tube. The composition of the layers is determined according to the targeted refractive index profile, as in the first embodiment.

The first core layers are deposited at a temperature above 1700°C and are made of silica doped with GeO₂. In order to achieve a refractive index difference Δn₁ of 8.80×10⁻³ as in the optical fiber of example 1 in Table 2 above, about 9 wt% of germanium should be incorporated.

A glass layer having the same composition as the first core layers is then deposited, at a sub-sintering temperature, namely, around 1450°C, in order to obtain a porous core layer.

The porous core layer is then impregnated at room temperature with an aqueous suspension containing nanoparticles co-doped with alumina (Al₂O₃) and erbium (Er), in the same fashion as in the first embodiment.

The impregnation solution is removed from the porous layer after a certain period of time, e.g. around 10 hours and the resulting doped porous layer is dried, preferably under argon flux at room temperature.

According to the present invention, the doped porous layer is then calcined up to 1200°C during at least 1 hour. This sub-step is particularly advantageous since it makes it possible to strengthen the nanoparticle structure before the collapsing step. This calcination step makes it possible to keep the nanoparticle structure in the preform after collapsing.

The doped porous layer is then sintered at a temperature above 1700°C.

Next, the preform is collapsed at 2200°C to obtain the primary doped preform in the form of a first preform rod.

The external tube, being the tube that is used as a starting point for the inside deposition step 50, is then eliminated e.g. by chemical etching. For instance, the preform is treated in a bath of hydrofluoric acid (HF, which has the ability to dissolve glass) at room temperature, so as to obtain the doped core with a minimal external silica clad layer.

The cladding part that is described in step 50 is not removed by this step. Only the external tube used to support the glass layers deposited on its inner part, e.g. by MCVD, is removed here. This is because it does not have sufficient optical purity.

Figure 5 shows the general look of the index profile at the end of the first doped preform rod making step 50.

Next, step 52 consists of manufacturing, separately from step 50, a second preform tube including the inner cladding, the depressed trench and the outer cladding of the future fiber, with the same index profile as in the first embodiment, by using a PCVD process according to a controlled gas delivery program.

Successive glass layers are deposited on the inner surface of a glass tube at a temperature above 1700°C. The composition of the glass layers is determined according to the targeted refractive index profile, as follows.

The first layers are made of silica (SiO₂). In addition, optionally, the first layers may be doped with germanium, in the form of GeO₂, which will increase the refractive index.

The depressed trench deposition is achieved at specified preform radial abscises by incorporation of defined quantities of fluorine, which will decrease the refractive index. In order to achieve a refractive index difference Δn₃ of -7.00×10⁻³ as in the optical fiber of example 1 in Table 2 above, about 2.5 wt% of fluorine should be incorporated, as in the first embodiment.

The last layers of the cladding are made in the same conditions as the first layers.

Figure 5 also shows the general look of the index profile at the end of the second preform tube making step 52.

The following step 54 consists of assembling the second depressed clad tube obtained at the end of step 52 around the first doped core rod obtained at the end of step 50.

Namely, the glass structures are assembled and fused at a temperature above 2000°C, so as to obtain a second doped preform rod.

Eventually, the second doped preform rod is optionally overcladded or sleeved, in the same fashion as in the first embodiment, to ensure single mode propagation of the signal, so as to obtain a sleeved or overcladded secondary preform.

The last step 56 consists of drawing the optionally sleeved or overcladded preform into an optical fiber exhibiting the same characteristics as in the first embodiment.

The invention also relates to an optical fiber laser comprising at least a portion of an optical fiber according to the invention.

The invention further relates to an optical amplifier comprising at least a portion of an optical fiber according to the invention and having a pump power around 500 mW or more.

The present invention makes it possible to improve the performance of amplifying fibers, e.g. EDFAs and opens the way to compact amplifiers functioning at high pump power i.e. around 500 mW or more.

In addition, the invention makes it possible to minimize the bending loss sensitivity of the fiber independently from the amplifying medium and the guiding mode characteristics.

Furthermore, the invention makes it possible to reduce the energy transfer between neighboring fiber loops, which usually induces signal perturbations and penalties.

The present invention is of course not limited to the embodiments described by way of examples.

In particular, the element reducing the refractive index of the inner core is not necessarily exclusively fluorine. Boron, or a combination of fluorine and boron, may also be chosen.

## Claims

1. A rare earth doped amplifying optical fiber comprising, from the center to the periphery:
an inner core,
an inner cladding surrounding the inner core,
a depressed trench surrounding the inner cladding and
an outer cladding,
the inner core having a radius r₁, a refractive index difference Δn₁ with respect to the outer cladding and having a silica-based main matrix doped with at least one rare earth element,
the inner cladding having a radius r₂ and a refractive index difference Δn₂ with respect to the outer cladding,
the depressed trench having a radius r₃ and a negative refractive index difference Δn₃ with respect to the outer cladding,
wherein
r₁ is comprised between 2.5 µm and 3.1 µm, r₂ is comprised between 4.1 µm and 15.8 µm, r₂-r₁ is comprised between 1.4 µm and 12.9 µm, r₃-r₂ is comprised between 4.7 µm and 18.9 µm, Δn₁ is comprised between 8.0×10⁻³ and 10.5×10⁻³ and Δn₃ is comprised between -14.2×10⁻³ and -3.7×10⁻³; and
the vo lume integral of the depressed trench, V₁₃, defined as
${V}_{13} = 2. {\int }_{{r}_{2}}^{{r}_{3}} Δn \left(r\right) . rdr \approx \left({{r}_{3}}^{2}-{{r}_{2}}^{2}\right) \times Δ ⁢ {n}_{3}$ , is comprised between -2200×10⁻³ µm² and -1600×10⁻³ µm².

2. An optical fiber according to claim 1, wherein
the fiber has a numerical aperture comprised between 0.16 and 0.18, preferably between 0.16 and 0.17;
at a wavelength of 1550 nm, the Mode Field Diameter, MFD, of the fiber is less than or equal to 8.0 µm; and
the fiber has bending losses less than 0.01 dB/m for a radius of curvature greater than or equal to 5 mm.

3. An optical fiber according to claim 1 or 2, wherein the inner core is doped by an element reducing the refractive index of silica, preferably fluorine.

4. An optical fiber according to any of the preceding claims, wherein the inner core is doped by the addition of nanoparticles containing at least one rare earth element and/or by the addition of at least one rare earth element from chloride salt precursors.

5. An optical fiber according to any of the preceding claims, wherein said at least one rare earth element is erbium, ytterbium or thulium, or a combination thereof.

6. An optical fiber according to any of the preceding claims, wherein the rare earth concentration in the inner core is comprised between 0.01 wt% and 0.5 wt%, preferably between 0.01 wt% and 0.2 wt%.

7. An optical fiber according to any of the preceding claims, wherein the inner core is further doped with germanium and/or phosphorus and/or aluminum.

8. An optical fiber according to any of the preceding claims, wherein the refractive index difference Δn₂ of the inner cladding with respect to the outer cladding is comprised between -1.0×10⁻³ and 1×10⁻³, preferably between -0.5×10⁻³ and 0.5×10⁻³ and is more preferably substantially zero.

9. An optical fiber according to any of the preceding claims, wherein the cut-off wavelength of the fiber is below 1500 nm.

10. An optical fiber laser comprising at least a portion of an optical fiber according to any of the preceding claims.

11. An optical amplifier comprising at least a portion of an optical fiber according to any of claims 1 to 9 and having a pump power greater than 500 mW.

12. A method of manufacturing a rare earth doped amplifying optical fiber according to any of claims 1 to 9, comprising steps of:
making (40) a preform tube, so as to obtain an inner cladding, a depressed trench and an outer cladding having a desired refractive index profile;
doping (42) said preform tube obtained in said preform tube making step (40), by forming a doped inner core in said preform tube;
collapsing said preform tube into a preform rod;
optionally overcladding or sleeving said preform rod into a preform; and
drawing (44) said preform into an optical fiber.

13. A method of manufacturing a rare earth doped amplifying optical fiber according to any of claims 1 to 9, comprising steps of:
making (50) a first doped preform rod consisting at least of a doped inner core having a desired refractive index profile, by
making a first preform tube starting from an external tube,
doping said first preform tube forming a doped inner core in said first preform tube,
collapsing said first preform tube into said first doped preform rod and eliminating said external tube;
separately making (52) a second preform tube, so as to obtain an inner cladding, a depressed trench and an outer cladding having a desired refractive index profile;
assembling (54) said second preform tube around said first doped preform rod and fusing said second preform tube onto said first doped preform rod, so as to obtain a second doped preform rod;
optionally overcladding or sleeving said second doped preform rod into a preform; and
drawing (56) said preform into an optical fiber.

14. A method according to claim 13, wherein said assembling step comprises fusing said second preform tube onto said first doped preform rod at a temperature above 2000°C.

15. A method according to claims 12 and 13, wherein said step (42) of doping said preform tube or said step (50) of making a first doped preform rod comprises using a Modified Chemical Vapor Deposition, MCVD process.

16. A method according to claim 15, wherein said MCVD process comprises steps of:
depositing at least one first core glass layer on the inner surface of said preform tube;
depositing a glass layer on the inner surface of said at least one first core glass layer, at a sub-sintering temperature, so as to obtain a porous core layer;
adding nanoparticles to said porous core layer, so as to obtain a doped porous core layer; and
calcinating said doped porous core layer to strengthen nanoparticle structure, preferably up to 1200°C during at least one hour.

17. A method according to claims 12 and 13, wherein said step (40) of making a preform tube or said step (52) of making a second preform tube comprises using a Plasma Chemical Vapor Deposition, PCVD, process.
